# DEMANDE DE BREVET EUROPEEN

(11) **EP 4 425 984 A1**
(43) Date de publication de la demande: **04.09.2024**
(21) Numéro de dépôt: 24158916.7
(22) Date de dépôt: 21.02.2024
(51) Int. Cl.: H04W 12/50, H04W 12/069, H04W 12/47, H04W 4/40, H04W 4/80

(54) **PROCÉDÉ D'ENREGISTREMENT DE CLÉS NUMÉRIQUES D'UN VÉHICULE DANS UN PORTEFEUILLE VIRTUEL ET DISPOSITIFS ASSOCIÉS**

(30) Priorité: 28.02.2023 FR 2301846
(71) Demandeur: IDEMIA France, 92400 Courbevoie (FR)
(72) Inventeur: UGLIETTI, Gianni, 92400 COURBEVOIE (FR); LETELLIER, Bruno, 92400 COURBEVOIE (FR)
(74) Mandataire: Regimbeau

(57) **Abrégé**

La présente invention concerne un procédé comprenant les étapes suivantes :
- réception, par un système (1), d'un premier identifiant et d'un deuxième identifiant transmis par un terminal utilisateur (5) préalablement transmis au terminal utilisateur (5) par le dispositif (2) par une communication sans fil nécessitant une proximité entre le terminal utilisateur (5) et le dispositif (2),
- vérification par le système (1) de l'existence d'une correspondance entre deux identifiants de référence mémorisés correspondant respectivement au premier identifiant et au deuxième identifiant,
- à condition que ladite correspondance existe, transmission par le système (1) :
- d'un mot de passe d'appairage au terminal utilisateur (5),
- d'un vérificateur à une unité de contrôle (3) du véhicule (4), le vérificateur étant configuré pour autoriser un établissement d'un canal de communication sécurisé entre le terminal utilisateur (5) et l'unité de contrôle (3) du véhicule (4).

## Description

### DOMAINE DE L'INVENTION

L'invention concerne les services de clés numériques de véhicules, en particulier de véhicules automobiles.

### ETAT DE LA TECHNIQUE

Des constructeurs de véhicules lancent des services de clés numériques (également connus sous le nom de « *phone-as-a-key services* ») afin de remplacer les clés traditionnelles par un terminal tel qu'un téléphone portable. Le terminal peut ainsi être utilisé par exemple pour déverrouiller une porte d'un véhicule ou démarrer le moteur du véhicule.

Or, les services de clés numériques actuels manquent d'ergonomie.

En effet, les usagers éprouvent des difficultés pour lancer la procédure d'appairage d'un véhicule avec leur téléphone portable et prouver qu'ils sont effectivement propriétaires du véhicule pour finaliser l'appairage des deux appareils.

Les constructeurs fournissent également une carte à puce comportant au moins une interface de communication contact et/ou sans contact comme solution de secours afin de pouvoir utiliser le véhicule même lorsque le terminal n'est pas utilisable, par exemple lorsqu'il est hors-service ou déchargé.

Or, les services de clés numériques actuels ne proposent pas de services liés à la carte à puce. L'usager d'un véhicule ne peut donc pas réaliser des opérations simples comme bloquer la carte à puce ou en commander une nouvelle. De plus, il n'est pas non plus prévu que plusieurs cartes à puce puissent être utilisables avec le même véhicule. Ainsi, en cas de problème avec la carte et le terminal, l'usager ne peut plus utiliser son véhicule.

### EXPOSE DE L'INVENTION

Un but de l'invention est donc de proposer un nouveau service à l'usager facilitant l'appairage de son téléphone portable avec le véhicule et la gestion de cartes à puce.

Il est à cet effet proposé un procédé d'initialisation d'appairage comprenant les étapes suivantes :
- réception, par un système, d'un premier identifiant et d'un deuxième identifiant transmis par un terminal utilisateur, le premier identifiant étant propre à un véhicule et le deuxième identifiant étant propre à un dispositif, le premier identifiant et le deuxième identifiant ayant été préalablement transmis au terminal utilisateur par le dispositif par une communication sans fil nécessitant une proximité entre le terminal et le dispositif,
- vérification par le système de l'existence, dans une base de données, d'une correspondance entre deux identifiants de référence mémorisés dans la base de données correspondant respectivement au premier identifiant et au deuxième identifiant,
- à condition que ladite correspondance existe dans la base de données, transmission par le système :
   - d'un mot de passe d'appairage au terminal utilisateur,
   - d'un vérificateur à une unité de contrôle du véhicule, le vérificateur étant configuré pour autoriser un établissement d'un canal de communication sécurisé entre le terminal et l'unité de contrôle du véhicule à condition qu'un mot de passe candidat transmis par le terminal utilisateur à l'unité de contrôle du véhicule corresponde audit mot de passe d'appairage transmis.

Ainsi, la procédure d'appairage du véhicule au terminal est simplifiée. En effet, l'usager a seulement besoin de mettre à proximité de son téléphone portable la carte à puce pour démarrer la procédure d'appairage et fournir un mot de passe, envoyé par le système à son téléphone, pour prouver qu'il est le propriétaire du véhicule afin de finaliser l'appairage.

De plus, le système sert d'interface entre l'usager et les services de clés numériques. Des services additionnels liés à la carte à puce, comme par exemple bloquer la carte à puce, commander une nouvelle carte à puce ou bien appairer au véhicule plusieurs cartes à puce, peuvent donc être directement paramétrés et centralisés dans le système pour être facilement accessibles par l'usager en se connectant au système, notamment en cas de problème avec la carte à puce.

On peut prévoir les étapes de :
- réception, par le système, des deux identifiants de référence, les deux identifiants de référence étant transmis par l'unité de contrôle du véhicule,
- mémorisation des deux identifiants de référence dans la base de données après leur réception.

On peut prévoir les étapes suivantes :
- réception, par le système, d'un ordre de dissociation entre le premier identifiant et le deuxième identifiant, l'ordre de dissociation étant émis par le terminal utilisateur et comprenant au moins l'un parmi le premier et le deuxième identifiant ;
- à condition qu'une correspondance entre au moins l'un des deux identifiants de référence mémorisés dans la base de donnée du système et l'au moins l'un parmi le premier identifiant et le deuxième identifiant compris dans l'ordre de dissociation, existe dans la base de données, suppression de la correspondance dans la base de données ; et
- transmission par le système d'une requête de dissociation à l'unité de contrôle du véhicule, ladite requête étant configurée pour informer l'unité de contrôle du véhicule qu'une suppression de ladite correspondance a été réalisée dans la base de donnée et pour commander l'unité de contrôle du véhicule de dissocier le dispositif et/ou le terminal utilisateur de l'unité de contrôle du véhicule, l'unité de contrôle étant configurée pour, après réception de la requête de dissociation en provenance du système, ne pas traiter des commandes émanant du dispositif et/ou du terminal utilisateur.

On peut prévoir en outre une étape de :
- sauvegarde de l'identifiant de référence correspondant au premier identifiant dans une deuxième base de données différente de la base de données avant la suppression de la correspondance dans la base de données.

On peut prévoir les étapes suivantes :
- réception par le système d'une commande d'un second dispositif distinct du dispositif ;
- transmission, par le système et à un fournisseur de dispositifs, de la commande.

On peut prévoir notamment que le système transmette en outre le premier identifiant propre au véhicule au fournisseur de dispositifs.

On peut prévoir les étapes suivantes :
- réception d'une notification émise par l'unité de contrôle du véhicule, la notification informant le système d'une demande d'appairage entre un deuxième dispositif et l'unité de contrôle du véhicule, le deuxième dispositif étant distinct du dispositif ;
- sur réception de ladite notification, transmission au terminal utilisateur par le système d'une invitation à accepter la demande d'appairage ;
- réception par le système d'une réponse à l'invitation, la réponse indiquant que la demande d'appairage est acceptée ou pas ; et
- transmission à l'unité de contrôle du véhicule, par le système, d'une autorisation ou d'un refus de la demande d'appairage en fonction de ladite réponse.

On peut prévoir que la transmission du premier identifiant et du deuxième identifiant au terminal utilisateur comprend :
- une communication en champ proche (NFC), ou
- une lecture optique, par le terminal utilisateur, d'un motif représentatif du premier et du deuxième identifiant et affiché par le dispositif, le motif étant par exemple un code barre ou un QR code.

On peut prévoir que le dispositif est une carte à puce.

On prévoit aussi selon l'invention un système comprenant :
- une interface de communication configurée pour recevoir un premier identifiant et un deuxième identifiant transmis par un terminal utilisateur, le premier identifiant étant propre à un véhicule et le deuxième identifiant étant propre à un dispositif, le premier identifiant et le deuxième identifiant ayant été préalablement transmis au terminal utilisateur par le dispositif par une communication sans fil nécessitant une proximité entre le terminal et le dispositif,

le système étant configuré pour vérifier l'existence, dans une base de données, d'une correspondance entre deux identifiants de référence mémorisés dans la base de données correspondant respectivement au premier identifiant et au deuxième identifiant ; et
   - une interface de communication configurée pour transmettre :
   - un mot de passe d'appairage au terminal utilisateur,
   - un vérificateur à une unité de contrôle du véhicule,
à condition que ladite correspondance existe dans la base de données,
le vérificateur étant configuré pour autoriser un établissement d'un canal de communication sécurisé entre le terminal et l'unité de contrôle du véhicule à condition qu'un mot de passe candidat transmis par le terminal utilisateur à l'unité de contrôle du véhicule corresponde au mot de passe d'appairage transmis.

On prévoit en outre selon l'invention un produit programme d'ordinateur comprenant des premières instructions de code de programme pour commander l'exécution des étapes du procédé selon l'invention, lorsque les premières instructions de code sont exécutées par un système ; et optionnellement des deuxièmes instructions de code de programme pour commander l'exécution des étapes d'un deuxième procédé, lorsque les deuxièmes instructions de code sont exécutées par un terminal utilisateur, le deuxième procédé comprenant :
- réception, par le terminal utilisateur, du premier identifiant et du deuxième identifiant, transmis par le dispositif,
- transmission, par le terminal utilisateur, au système, du premier identifiant et du deuxième identifiant reçus.

### DESCRIPTION DES FIGURES

Nous allons maintenant présenter un mode de réalisation de l'invention à titre d'exemple non-limitatif à l'appui des dessins sur lesquels :
la figure 1 illustre de façon schématique des communications en champ proche entre un lecteur interne du véhicule et le terminal utilisateur ;
la figure 2 illustre une cartographie des échanges entre un système, un dispositif et une unité de contrôle du véhicule avant un premier démarrage du véhicule ;
la figure 3 illustre une cartographie des échanges entre le système, le dispositif, l'unité de contrôle du véhicule et le terminal utilisateur après le premier démarrage du véhicule ;
la figure 4 est un logigramme d'un mode de mise oeuvre du procédé selon l'invention ;
la figure 5 est un logigramme illustrant des étapes supplémentaires au logigramme de la figure 4;
la figure 6 est un logigramme illustrant d'autres étapes supplémentaires au logigramme de la figure 4; et
la figure 7 est un logigramme illustrant d'autres étapes supplémentaires au logigramme de la figure 4.

### DESCRIPTION DETAILLEE DE L'INVENTION

### Dispositifs

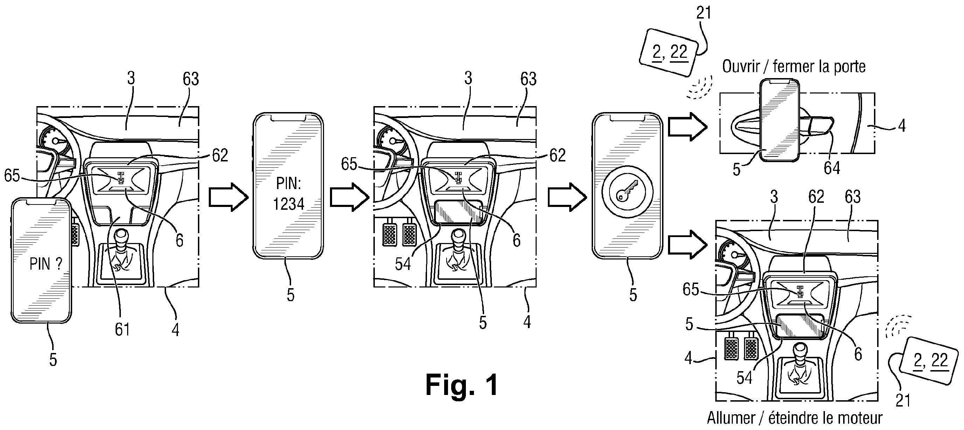

En référence à la figure 1, un véhicule 4 comprend un lecteur interne 6 et une unité de contrôle 3.

Le lecteur interne 6 comprend :
- une première interface de communication 61 configurée pour échanger des données par exemple via une communication en champ proche, par exemple de type NFC (NFC pour « *Near Field Communication* » en terminologie anglo-saxonne) ou Bluetooth, avec un terminal utilisateur 5 et/ou un dispositif 2, 22 ; et
- une deuxième interface de communication 62 configurée pour transmettre des données avec l'unité de contrôle 3 du véhicule 4.
- Un bouton poussoir 65 configuré pour commander une émission d'un ordre de dissociation entre un premier identifiant relatif au véhicule 4 et un deuxième identifiant relatif au dispositif 2, 22 ;

La première interface de communication 61 peut par exemple se trouver dans l'habitacle 63 du véhicule, ou bien au niveau de la portière 64, ou les deux.

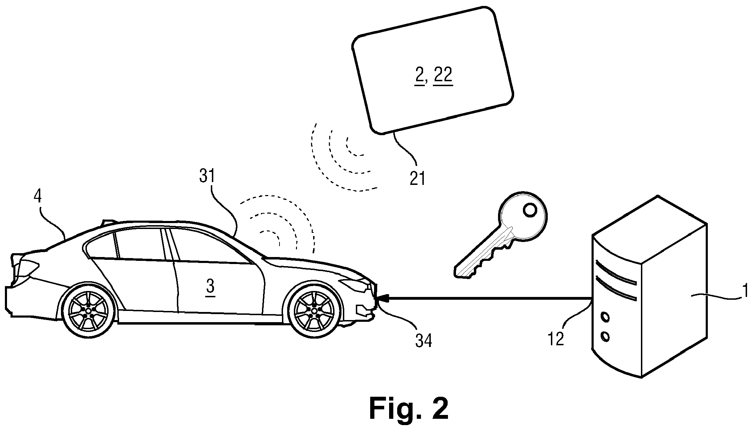

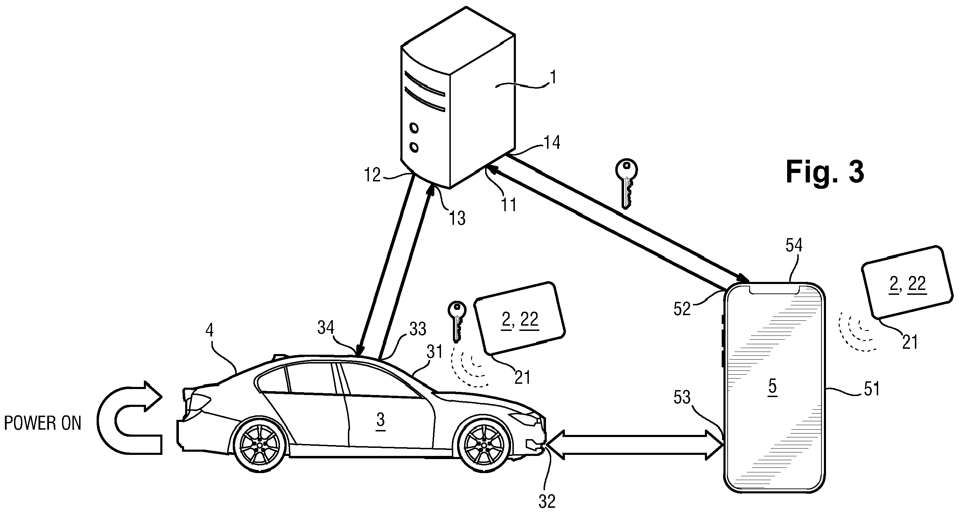

En référence aux figures 2 et 3, l'unité de contrôle 3 comprend :
- une première interface de communication 31 ;
- une deuxième interface de communication 32 ; et
- une première mémoire (non représentée sur les figures).

La première et la deuxième interface 31, 32 sont configurées en émetteur (selon la terminologie anglosaxonne « *Poller* ») et/ou en récepteur (selon la terminologie anglosaxonne « *Listener*») dans un mode de communication en champ proche, par exemple NFC (selon la terminologie anglosaxonne « *NFC reader*») ou Bluetooth, respectivement avec un dispositif 2 et un terminal utilisateur 5. Il est également prévu que la première interface de communication 31 soit configurée en émetteur et/ou récepteur dans un mode de communication en champ proche, par exemple NFC (selon la terminologie anglosaxonne « *NFC reader*») ou Bluetooth avec un second dispositif 22 ou plusieurs dispositifs.

L'homme du métier se référera aux documents suivants *NFC Analog Technical Spécification 2.1* - *NFC Forum, NFC Digital Protocol Technical Spécification 2.1* ainsi qu'au document *Digital Key Release 3, Technical Spécification 1.1.0* - *Car Connectivity Consortium* pour paramétrer et dimensionner la première interface de communication 31 et la deuxième interface de communication 32.

Par exemple, en récepteur, la première interface 31 est configurée pour recevoir du dispositif 2 un identifiant propre du dispositif 2. En émetteur, la première interface 31 est configurée pour transmettre au dispositif 2 un identifiant propre au véhicule 4.

En outre, la deuxième interface 32 de communication est configurée pour établir un canal de communication sécurisé entre l'unité de contrôle 3 du véhicule 4 et le terminal utilisateur 5. L'établissement du canal sécurisé peut par exemple suivre un protocole de sécurité de type SPAKE2+ au moyen du premier secret transmis à l'unité de contrôle 3 du véhicule 4, par exemple un vérificateur de mot de passe (ou vérificateur dans la suite du document) configuré pour autoriser l'établissement du canal sécurisé entre le terminal 5 et l'unité de contrôle 3 du véhicule 4 à condition qu'un mot de passe candidat transmis par le terminal utilisateur 5 à l'unité de contrôle 3 du véhicule 4 corresponde à un deuxième secret, par exemple un mot de passe d'appairage, préalablement transmis au terminal utilisateur 5 par un système 1.

L'homme du métier se référera aux documents *Network Working Groupe Internet Draft : SPAKE2+, an Augmented SPAKE, draft-bar-cfrg-spake2plus-00, March 9, 2020,* et *Digital Key Release 3, Technical Spécification 1.1.0* - *Car Connectivity Consortium* pour paramétrer l'établissement du canal de communication sécurisé.

L'unité de contrôle 3 peut comprendre en outre une troisième interface de communication 33 configurée pour transmettre l'identifiant propre au véhicule 4 et l'identifiant propre au dispositif 2 au système 1, ou pour transmettre des identifiants propres à plusieurs dispositifs.

L'unité de contrôle 3 peut comprendre également une quatrième interface de communication 34 configurée pour recevoir le premier secret transmis par le système 1. La mémoire de l'unité de contrôle 3 est configurée pour stocker des données, par exemple le premier secret. En particulier la mémoire est configurée pour stocker le vérificateur de mot de passe transmis par le système 1. De plus, la mémoire est configurée pour stocker l'identifiant propre au véhicule 4 et l'identifiant propre au dispositif 2. Il est également prévu que la mémoire de l'unité de contrôle 3 soit configurée pour stocker un second vérificateur de mot de passe transmis par le système 1 ou une pluralité de vérificateurs de mot de passe d'une pluralité de dispositifs transmis par le système 1. Il est aussi prévu que la mémoire de l'unité de contrôle 3 soit configurée pour stocker le second identifiant propre au second dispositif 22 ou plusieurs identifiants propres à chaque dispositif d'une pluralité de dispositifs.

L'unité de contrôle 3 du véhicule 4 est en outre configurée pour ne pas traiter les requêtes transmises par le terminal utilisateur 5, par exemple lorsque le terminal utilisateur 5 est à proximité du lecteur interne 6 au niveau de la porte 64 ou dans l'habitacle 63, et par un dispositif 2, 22. En l'espèce, l'unité de contrôle 3 du véhicule 4 supprime l'identifiant propre du dispositif 2, 22 de sorte que ledit dispositif 2, 22 ne puisse plus être reconnu par ladite unité de contrôle 3 du véhicule 4 et, l'unité de contrôle 3 du véhicule 4 supprime le premier secret et désactive le canal de communication sécurisé entre ladite unité de contrôle 3 du véhicule 4 et le terminal utilisateur 5.

Le dispositif 2 et le deuxième dispositif 22 peuvent être des cartes à puce comprenant au moins :
- une deuxième mémoire (non représentée sur les figures); et
- une interface de communication 21.

L'interface de communication 21 des dispositifs 2, 22 comprend un module NFC, et une bobine d'antenne. La bobine d'antenne présente un ou plusieurs enroulements coaxiaux coplanaires parallèles au plan de la carte à puce, et par conséquent présente un axe magnétique perpendiculaire au plan de la carte à puce. L'interface de communication 21 des dispositifs 2, 22 (carte à puce) est configurée pour effectuer une communication NFC (sans contact en champs proche) avec un terminal NFC externe, par exemple le terminal utilisateur 5 (par exemple un téléphone intelligent ou smartphone en terminologie anglo-saxonne) par la bobine d'antenne. Lorsque la carte à puce (les dispositifs 2, 22) et le terminal NFC externe (terminal utilisateur 5) sont placés suffisamment près l'un de l'autre, la bobine d'antenne de la carte à puce est couplée inductivement à une bobine d'antenne du terminal NFC externe

(terminal utilisateur 5), et des données peuvent être échangées en utilisant des techniques NFC classiques telles que celles définies par les normes ISO 14443, ISO 15693. À cet effet, la bobine d'antenne de la carte à puce est associée à des composants passifs (ex. condensateurs) pour former un circuit d'antenne accordé à une fréquence de fonctionnement du terminal NFC externe (terminal utilisateur 5), par exemple 13,56 MHz.

Selon d'autres modes de réalisation, l'interface de communication 21 peut comprendre l'un des éléments suivants :
- un module Bluetooth ;
- un module électronique configuré pour échanger des données avec le terminal NFC externe, par exemple le terminal utilisateur 5, lorsqu'il y a un contact entre le terminal externe et l'interface de communication 21 selon la norme ISO7816-2:2017 d'Octobre 2017 ou la norme ISO7810:2019 de Décembre 2019 ;
- un motif, par exemple un code barre ou un QR code (pour « Quick response » en terminologie anglosaxonne), affiché par le dispositif 2, 22.

L'interface de communication 21 des dispositifs 2, 22 est en outre configurée pour recevoir des identifiants, par exemple le premier identifiant, par l'unité de contrôle 3 du véhicule 4 et/ou du lecteur interne 6, et transmettre des identifiants, par exemple le deuxième identifiant, à l'unité de contrôle 3 du véhicule 4 et/ou au lecteur interne 6. Le premier identifiant et le deuxième identifiant peuvent être respectivement l'identifiant propre au véhicule 4 et l'identifiant propre au dispositif 2.

Selon un mode de réalisation, l'interface de communication 21 des dispositifs 2, 22 est configurée pour transmettre des identifiants, par exemple le premier identifiant et le deuxième identifiant, au terminal utilisateur 5 par une communication en champ proche. Le premier identifiant étant propre au véhicule 4 et le deuxième identifiant étant propre au dispositif 2.

Selon un autre mode de réalisation, l'interface de communication 21 des dispositifs 2, 22 est configurée pour transmettre des identifiants, par exemple le premier identifiant et le deuxième identifiant, au terminal utilisateur 5 par une lecture optique, par le terminal 5, d'un motif représentatif du premier identifiant et du deuxième identifiant et affichés par le dispositif 2, le motif étant par exemple un code barre ou un QR code.

La mémoire est configurée pour stocker le premier identifiant et le deuxième identifiant.

Le terminal utilisateur 5 comprend au moins :
- une troisième mémoire (non représentée) ;
- une première interface de communication 51 ;
- une deuxième interface de communication 52 ;
- une troisième interface de communication 53 ; et
- une quatrième interface de communication 54.

Le terminal utilisateur 5 peut être un terminal mobile, par exemple de type « smartphone », ou bien un terminal fixe, par exemple un ordinateur.

Selon un mode de réalisation, l'interface de communication 51 du terminal utilisateur 5 est configurée pour recevoir le premier identifiant et le deuxième identifiant transmis par le dispositif 2 par une communication en champ proche, par exemple de type NFC ou Bluetooth. Le premier identifiant étant propre au véhicule 4 et le deuxième identifiant étant propre au dispositif 2.

Selon un autre mode de réalisation, l'interface de communication 51 du terminal 5 est configurée pour recevoir le premier identifiant et le deuxième identifiant transmis par le dispositif 2 par une lecture optique, par le terminal utilisateur 5, d'un motif représentatif du premier identifiant et du deuxième identifiant et affichés par le dispositif 2, le motif étant par exemple un code barre ou un QR code.

Il est également prévu que l'interface de communication 51 du terminal utilisateur 5 soit configurée pour recevoir des identifiants transmis par un second dispositif 22 ou par chaque dispositif d'une pluralité de dispositifs.

La deuxième interface de communication 52 du terminal utilisateur 5 est configurée pour échanger des données avec le système 1.

La troisième interface de communication 53 du terminal utilisateur 5 est configurée pour échanger des données avec l'unité de contrôle 3 du véhicule 4. Par exemple, la troisième interface de communication 53 du terminal utilisateur 5 est configurée pour transmettre le deuxième secret à l'unité de contrôle du véhicule.

La quatrième interface de communication 54 du terminal utilisateur 5 est configurée pour transmettre des données au lecteur interne 6, par exemple le deuxième secret.

La mémoire du terminal utilisateur 5 est configurée pour stocker des données, par exemple le deuxième secret. En particulier, la mémoire est configurée pour stocker le mot de passe d'appairage transmis par le système 1. De plus, la mémoire est configurée pour stocker le premier identifiant et le deuxième identifiant. Il est également prévu que la mémoire stocke une pluralité d'identifiants.

Le terminal utilisateur 5 peut comprendre un produit programme d'ordinateur, par exemple une application pour téléphone portable, comprenant des instructions de code exécutées par un processeur du terminal utilisateur 5 configuré pour commander les interfaces de communication 51, 52, 53, 54 du terminal utilisateur 5 et la troisième mémoire du terminal utilisateur 5.

Le premier secret et le deuxième secret, par exemple, respectivement, le vérificateur de mot de passe et le mot de passe d'appairage, sont transmis par le système 1 comprenant :
- une base de données (non représentée) configurée pour enregistrer initialement un identifiant de référence propre au véhicule 4, les premier et deuxième secrets associés à l'identifiant référent propre au véhicule 4, puis l'identifiant propre au véhicule 4 et l'identifiant propre au dispositif 2 transmis par l'unité de contrôle 3 du véhicule 4 ; et
- un serveur (non représenté) comprenant :
- une interface de communication 11 configurée pour recevoir le premier identifiant et le deuxième identifiant transmis par le terminal utilisateur 5 ;
- une deuxième interface de communication 12 configurée pour transmettre le premier secret à l'unité de contrôle 3 du véhicule 4 ; et
- une troisième interface de communication 13 configurée pour recevoir l'identifiant propre au véhicule 4 et l'identifiant propre au dispositif 2 transmis par l'unité de contrôle 3 du véhicule 4.

La base de données peut en outre être configurée pour enregistrer une pluralité de secrets. Elle peut également être configurée pour enregistrer l'identifiant propre à un second dispositif 22 ou plusieurs identifiants propres à chaque dispositif d'une pluralité de dispositifs.

L'interface de communication 11 peut en outre être configurée pour recevoir plusieurs identifiants transmis par le terminal utilisateur 5. Par exemple, l'identifiant propre au second dispositif 22 ou plusieurs identifiants propres à chaque dispositif d'une pluralité de dispositifs.

Le serveur peut également être configuré pour vérifier qu'il existe une correspondance, dans la base de données, entre des identifiants transmis par l'unité de contrôle 3 du véhicule 4 mémorisés dans la base de données et des identifiants transmis par le terminal utilisateur 5 au serveur du système 1 et préalablement reçus par le terminal utilisateur 5 en provenance du dispositif 2.

En l'espèce, le serveur comprend en outre une quatrième interface de communication 14 configurée pour transmettre le deuxième secret au terminal utilisateur 5 à condition qu'il existe une correspondance, dans la base de données, entre les deux identifiants transmis par l'unité de contrôle 3 du véhicule 4 mémorisés dans la base de données et, respectivement, les identifiants transmis par le terminal utilisateur 5 au serveur du système 1 et préalablement reçus par le terminal utilisateur 5 en provenance du dispositif 2.

La deuxième interface de communication 12 peut en outre être configurée pour transmettre le premier secret à l'unité de contrôle 3 du véhicule 4 à condition qu'il existe une correspondance, dans la base de données, entre les deux identifiants transmis par l'unité de contrôle 3 du véhicule 4 mémorisés dans la base de données et, respectivement, les identifiants transmis par le terminal utilisateur 5 au serveur du système 1 et préalablement reçus par le terminal utilisateur 5 en provenance du dispositif 2.

Le serveur peut également être configuré pour supprimer une correspondance entre au moins l'un des deux identifiants de référence mémorisés dans la base de données du système 1 et l'au moins un parmi le premier identifiant et le deuxième identifiant reçus par un ordre de dissociation, à la condition qu'une correspondance existe dans la base de données, entre au moins l'un des deux identifiants de référence mémorisés dans la base de donnée du système 1 et l'au moins un parmi le premier identifiant et le deuxième identifiant compris dans l'ordre de dissociation.

En l'espèce le serveur comprend en outre une deuxième base de données configurée pour enregistrer l'identifiant de référence avant suppression de la correspondance.

La quatrième interface de communication 14 est en outre configurée pour transmettre un message d'erreur au terminal utilisateur 5 dans le cas où la correspondance n'existe pas dans la base de données.

Par exemple, le message d'erreur peut inviter l'usager à contacter un support technique du véhicule 4 ou du dispositif 2.

L'interface de communication 11 est en outre configurée pour recevoir un ordre de dissociation entre le premier identifiant et le deuxième identifiant, l'ordre de dissociation étant émis par le terminal utilisateur 5.

La deuxième interface de communication 12 est configurée pour transmettre une requête de dissociation à l'unité de contrôle 3 du véhicule 4 comprenant :
- une information, à destination de l'unité de contrôle 3 du véhicule 4, notifiant qu'une suppression de ladite correspondance a été réalisée dans la base de données ; et
- une commande de l'unité de contrôle 3 du véhicule 4 pour dissocier le dispositif 2, 22 et/ou le terminal utilisateur 5 avec l'unité de contrôle du véhicule 4.

Par exemple, la commande peut comprendre des instructions de code qui, lorsqu'elles sont exécutées par l'unité de contrôle 3 du véhicule 4, mettent en oeuvre une suppression de l'identifiant propre du dispositif 2 et/ou l'identifiant propre à un second dispositif 22 et/ou plusieurs identifiants propres à chaque dispositif d'une pluralité de dispositifs et du premier secret et mettent en oeuvre une désactivation du canal de communication sécurisé entre ladite unité de contrôle 3 du véhicule 4 et le terminal utilisateur 5

Selon un autre mode de réalisation, la requête de dissociation est émise par un bouton poussoir 65 du lecteur interne 6.

Le système 1 peut comprendre en outre plusieurs serveurs interconnectées.

Le deuxième secret peut être un mot de passe d'appairage pouvant être reconnu par le vérificateur de mot de passe.

### Procédés

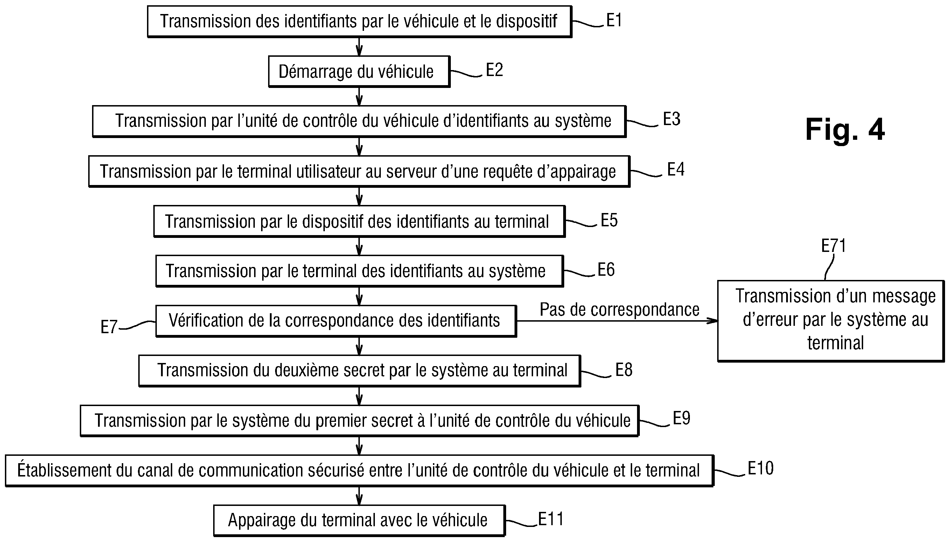

En référence à la figure 4, un procédé conjointement mis en oeuvre par le système 1, l'unité de contrôle 3 du véhicule 4, le dispositif 2 et le terminal utilisateur 5 comprend les étapes suivantes.

Au cours d'une étape E1, le dispositif 2 transmet l'identifiant propre au dispositif 2 à l'unité de contrôle 3 du véhicule 4 et l'unité de contrôle 3 du véhicule 4 transmet l'identifiant propre au véhicule 4 au dispositif 2.

Au cours d'une étape E2, le véhicule 4 est démarré pour la première fois.

Au cours d'une étape E3, le système 1 reçoit l'identifiant propre au dispositif 2 et l'identifiant propre au véhicule 4 transmis par l'unité de contrôle 3 du véhicule 4.

Au cours d'une étape E4, un usager du véhicule 4 transmet par le terminal utilisateur 5 une requête au système 1 afin de démarrer une tentative d'appairage du terminal utilisateur 5 au véhicule 4, par exemple par l'intermédiaire de l'application du constructeur automobile du véhicule 4.

À ce stade, le terminal utilisateur 5 demande à l'usager d'approcher le dispositif 2 du terminal utilisateur 5, par exemple en le notifiant via l'application par un message.

Au cours d'une étape E5, le dispositif 2 transmet l'identifiant propre au dispositif 2 et l'identifiant propre au véhicule 4 au terminal utilisateur 5 via une communication sans fil nécessitant une proximité entre le dispositif 2 et le terminal utilisateur 5, par exemple par une communication en champ proche (NFC), ou via une lecture optique par le terminal utilisateur 5 d'un motif représentatif des identifiants et affichés par le dispositif 2, le motif étant par exemple un code barre ou un QR code.

Au cours d'une étape E6, le terminal utilisateur 5 transmet l'identifiant propre au dispositif 2 et l'identifiant propre au véhicule 4 au système 1.

Au cours d'une étape E7, le système 1 vérifie l'existence d'une correspondance, dans la base de données, entre les deux identifiants transmis par l'unité de contrôle 3 du véhicule 4 mémorisés dans la base de données et, respectivement, les identifiants transmis par le terminal utilisateur 5 au système 1, reçus par le terminal utilisateur 5 en provenance du dispositif 2 au cours de l'étape E5.

Dans le cas où la correspondance existe, le système 1 transmet au cours d'une étape E8 le deuxième secret associé au couple d'identifiants mémorisé dans la base de données au terminal utilisateur 5.

Puis, au cours d'une étape E9, le premier secret est transmis par le système 1 à l'unité de contrôle 3 du véhicule 4.

Le premier secret peut par exemple être le vérificateur de mot de passe et le deuxième secret le mot de passe d'appairage. En l'espèce, le terminal utilisateur 5 transmet à l'unité de contrôle 3 du véhicule 4 via une communication en champ proche (NFC) un mot de passe candidat, le vérificateur de mot de passe autorisant ainsi l'établissement du canal de communication sécurisé entre le terminal 5 et l'unité de contrôle 3 du véhicule 4 à condition que le mot de passe candidat transmis par le terminal utilisateur 5 à l'unité de contrôle 3 du véhicule 4 corresponde au mot de passe d'appairage transmis par le système 1 au terminal utilisateur 5.

Si le vérificateur donne son autorisation, le canal de communication sécurisé entre l'unité de contrôle 3 du véhicule 4 et le terminal utilisateur 5 est établi au cours d'une étape E10.

Au cours d'une étape E11, l'usager est invité, par exemple en recevant une notification sur son terminal 5, à appairer son terminal 5 au véhicule 4. Il peut, par exemple, poser à proximité du lecteur interne 6 du véhicule 4 son terminal 5 pour procéder à l'appairage. Par appairage, on entend une procédure de génération, partage et mémorisation de clés cryptographiques entre l'unité de contrôle 3 du véhicule 4 et le terminal utilisateur 5, par l'intermédiaire du canal de communication sécurisé, afin de permettre au terminal utilisateur 5 de pouvoir interagir avec le véhicule 4 (par exemple permettre au terminal utilisateur 5 de pouvoir commander différents organes d'un véhicule, par exemple, une ouverture des portes, ou bien un démarrage du moteur).

Le terminal utilisateur 5 est appairé au véhicule 4.

L'usager peut alors interagir avec les différents organes du véhicule 4 en communication en champ proche. Par exemple, il peut rapprocher son terminal utilisateur 5 ou son dispositif 2 de la poignée pour déverrouiller les portes du véhicule 4 puis, lorsqu'il prend place dans l'habitacle, il peut placer son terminal 5 dans le ou à proximité du lecteur interne 6 du véhicule 4 pour démarrer le moteur.

Dans le cas où la correspondance n'existe pas entre les identifiants, lors de la vérification procédée à l'étape E7, le système 1 transmet, au cours d'une étape E71, au terminal utilisateur 5 un message d'erreur au lieu du deuxième secret, le message d'erreur indiquant que le terminal utilisateur 5 n'est pas autorisé à communiquer avec le véhicule 4, ou d'initier la mise en place d'un canal sécurisé.

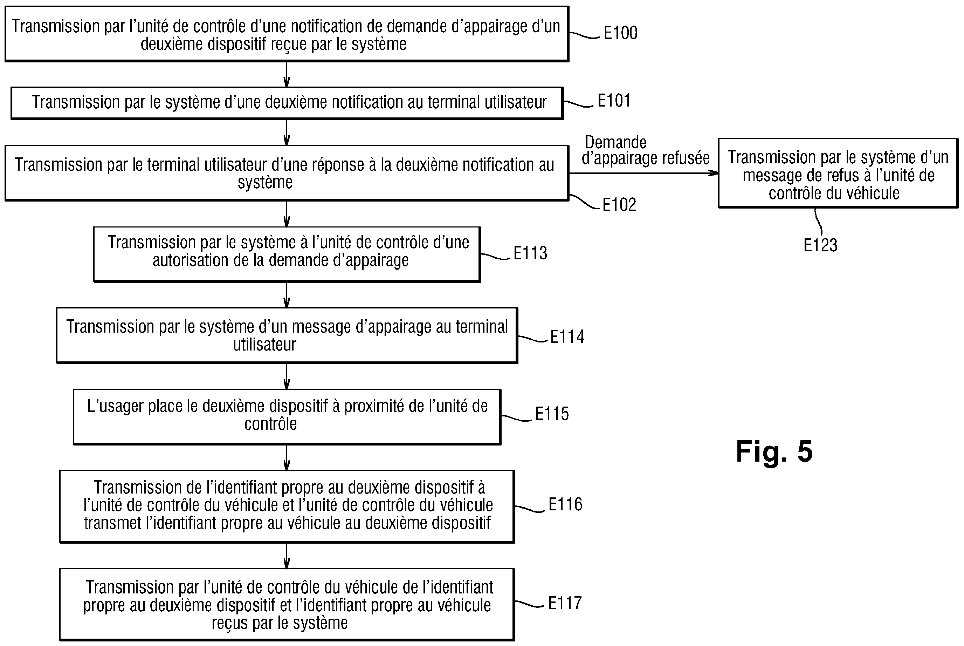

En référence à la figure 5, l'usager peut appairer plusieurs dispositifs au véhicule 4.

Au cours d'une étape E100, le système 1 reçoit une notification émise par l'unité de contrôle 3 du véhicule 4 informant le système 1 d'une demande d'appairage entre un deuxième dispositif 22 et l'unité de contrôle 3 du véhicule 4.

Sur réception de la notification, le système 1 transmet au terminal utilisateur 5 une deuxième notification invitant à accepter la demande d'appairage au cours d'une étape E101.

Au cours d'une étape E102, le système 1 reçoit une réponse à la deuxième notification par le terminal utilisateur 5.

La réponse peut par exemple être une requête transmise par le terminal utilisateur indiquant que la demande d'appairage est acceptée ou pas.

Dans le cas où la réponse indique que la demande d'appairage est acceptée, le système 1 transmet à l'unité de contrôle 3 du véhicule 4 une autorisation de la demande d'appairage au cours d'une étape E113.

L'unité de contrôle 3 du véhicule 4 est apte à recevoir l'identifiant propre du deuxième dispositif 22 transmis par le deuxième dispositif 22.

Au cours d'une étape E114, le système 1 transmet au terminal utilisateur 5 un message indiquant à l'usager d'appairer le deuxième dispositif 22.

Dans un mode de réalisation alternatif, l'unité de contrôle du véhicule 4 affiche un message à l'attention de l'usager pour lui indiquer d'appairer le deuxième dispositif 22.

Au cours d'une étape E115, l'usager place le deuxième dispositif 22 à proximité de l'unité de contrôle 3 du véhicule 4.

Au cours d'une étape E116, l'identifiant propre au deuxième dispositif 22 est transmis à l'unité de contrôle 3 du véhicule 4, pour y être mémorisé, et l'unité de contrôle 3 du véhicule 4 transmet l'identifiant propre au véhicule 4 au deuxième dispositif 22, pour y être mémorisé, via une communication sans fil nécessitant une proximité entre le deuxième dispositif 22 et l'unité de contrôle 3, par exemple par une communication en champ proche (NFC). Dans un mode de réalisation alternatif, la transmission de l'identifiant propre au deuxième dispositif 22 est effectuée par une lecture optique, par l'unité de contrôle 3 du véhicule 4, d'un motif représentatif du premier identifiant et affiché par le deuxième dispositif 22, le motif étant par exemple un code barre ou un QR code.

Au cours d'une étape E117, l'unité de contrôle 3 du véhicule 4 transmet au système 1 l'identifiant propre du deuxième dispositif 22 et l'identifiant propre au véhicule 4.

Dans le cas où la réponse indique que la demande d'appairage est refusée, le système 1 transmet, à l'unité de contrôle 3 du véhicule 4, un message de refus de la demande d'appairage au cours d'une étape E123.

Dans ce cas, le second dispositif 22 n'est pas appairé au véhicule 4.

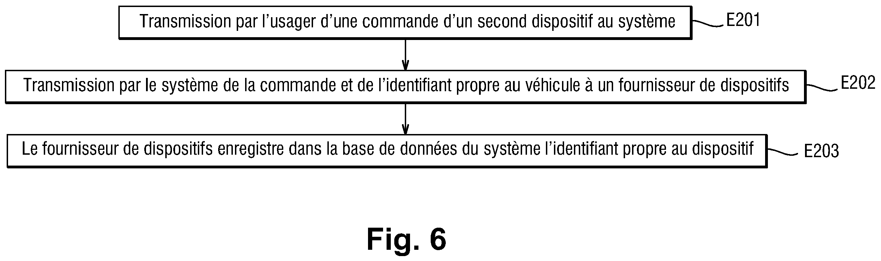

En référence à la figure 6, l'usager peut en outre demander un second dispositif 22 directement au constructeur selon les étapes suivantes.

Au cours d'une étape E201, le système 1 reçoit une commande d'un second dispositif 22 distinct du dispositif 2 par l'usager.

Au cours d'une étape E202, le système 1 transmet la commande et optionnellement l'identifiant propre au véhicule à un fournisseur de dispositifs.

Par exemple, la commande peut être transmise sous forme d'une requête par le système 1.

Ainsi, le deuxième dispositif 22 mémorisant son identifiant propre de dispositif 22 et/ou affichant un motif de son identifiant propre de dispositif 22 est expédié par le fournisseur de dispositifs à destination de l'usager. Optionnellement, le dispositif 22 expédié mémorise également l'identifiant propre au véhicule 4 et/ou affiche un motif de l'identifiant propre au véhicule 4. Dans un mode de réalisation alternatif, le motif affiché par le deuxième dispositif 22 est représentatif de l'identifiant propre du dispositif 22 et de l'identifiant propre au véhicule 4 sous la forme, par exemple, d'un code barre ou QR code.

Puis, les étapes E100, E101, E102 et E113 à E117 peuvent être mises en oeuvre par l'usager pour appairer le second dispositif 22 au véhicule 4.

Au cours d'une étape E203 optionnelle, le fournisseur de dispositifs enregistre dans la base de données du système 1 l'identifiant propre au second dispositif 22.

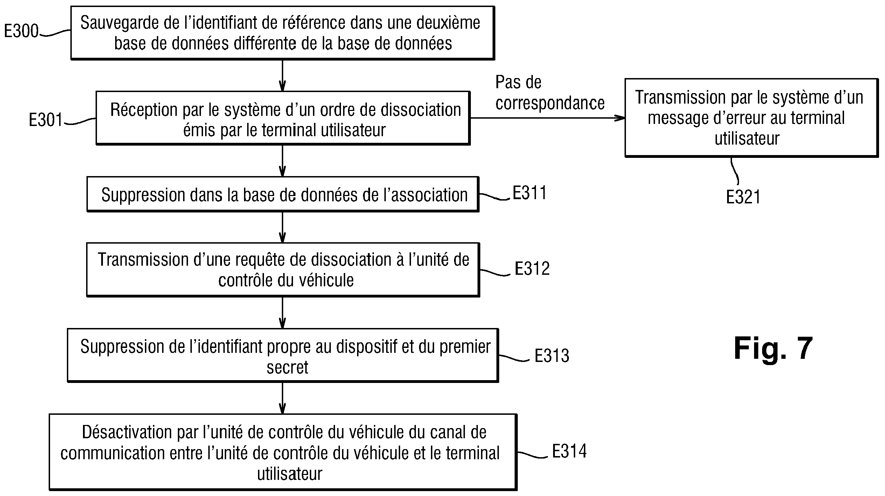

En référence à la figure 7 l'usager peut supprimer l'appairage du terminal utilisateur 5 et/ou du dispositif 2 au véhicule 4 selon les étapes suivantes.

Au cours d'une étape E301, le système 1 reçoit un ordre de dissociation entre le premier identifiant et le deuxième identifiant, l'ordre de dissociation étant émis par le terminal utilisateur 5.

Par exemple, l'ordre peut être émis et transmis par le terminal utilisateur 5, au système 1, sous forme d'une requête comprenant au moins l'un parmi le premier identifiant et le deuxième identifiant.

Selon un autre mode de mise en oeuvre, l'ordre peut être émis par le bouton poussoir 65 du lecteur interne 6.

Dans le cas où une correspondance entre au moins l'un des deux identifiants de référence mémorisés dans la base de données du système 1 et l'au moins un parmi le premier identifiant et le deuxième identifiant reçus par la requête, existe dans la base de données, la correspondance dans la base de données est supprimée au cours d'une étape E311.

Alors le système 1 transmet, au cours d'une étape E312, une requête de dissociation à l'unité de contrôle 3 du véhicule 4 pour informer l'unité de contrôle 3 du véhicule 4 qu'une suppression de ladite association a été réalisée dans la base de données et pour commander l'unité de contrôle 3 du véhicule 4 de dissocier le dispositif 2 et/ou le terminal utilisateur 5 avec l'unité de contrôle du véhicule 4.

Au cours d'une étape E313, l'unité de contrôle 3 du véhicule 4 supprime l'identifiant propre au dispositif 2, de sorte que ledit dispositif 2 ne puisse plus être reconnu par ladite unité de contrôle 3 du véhicule 4, et supprime le premier secret.

Au cours d'une étape E314, l'unité de contrôle désactive le canal de communication sécurisé entre ladite unité de contrôle 3 du véhicule 4 et le terminal utilisateur 5.

Ainsi, l'unité de contrôle 3 du véhicule 4 ne traite plus des commandes, par exemple des requêtes, émanant du terminal utilisateur 5 et/ou du dispositif 2.

La suppression peut être précédée d'une étape E300 dans laquelle une sauvegarde de l'identifiant de référence correspondant au premier identifiant est effectuée dans une deuxième base de données différente de la base de données.

Dans le cas où la correspondance entre au moins l'un des deux identifiants de référence mémorisés dans la base de données du système 1 et l'au moins un parmi le premier identifiant et le deuxième identifiant reçus par la requête de dissociation, n'existe pas dans la base de données, alors le système 1 transmet un message d'erreur au terminal utilisateur 5 au cours d'une étape E321. Par exemple, le message d'erreur peut inviter l'usager à contacter un support technique du véhicule 4 ou du dispositif 2.

## Revendications

1. Procédé d'initialisation d'appairage comprenant les étapes suivantes :
- réception, par un système (1), d'un premier identifiant et d'un deuxième identifiant transmis par un terminal utilisateur (5), le premier identifiant étant propre à un véhicule (4) et le deuxième identifiant étant propre à un dispositif (2), le premier identifiant et le deuxième identifiant ayant été préalablement transmis au terminal utilisateur (5) par le dispositif (2) par une communication sans fil nécessitant une proximité entre le terminal utilisateur (5) et le dispositif (2),
- vérification par le système (1) de l'existence, dans une base de données, d'une correspondance entre deux identifiants de référence mémorisés dans la base de données correspondant respectivement au premier identifiant et au deuxième identifiant,
- à condition que ladite correspondance existe dans la base de données, transmission par le système (1) :
- d'un mot de passe d'appairage au terminal utilisateur (5),
- d'un vérificateur à une unité de contrôle (3) du véhicule (4), le vérificateur étant configuré pour autoriser un établissement d'un canal de communication sécurisé entre le terminal utilisateur (5) et l'unité de contrôle (3) du véhicule (4) à condition qu'un mot de passe candidat transmis par le terminal utilisateur (5) à l'unité de contrôle (3) du véhicule (4) corresponde audit mot de passe d'appairage transmis.

2. Procédé selon la revendication 1, comprenant en outre des étapes de :
- réception, par le système (1), des deux identifiants de référence, les deux identifiants de référence étant transmis par l'unité de contrôle (3) du véhicule (4),
- mémorisation des deux identifiants de référence dans la base de données après leur réception.

3. Procédé selon l'une quelconque des revendications précédentes, comprenant en outre les étapes suivantes :
- réception, par le système (1), d'un ordre de dissociation entre le premier identifiant et le deuxième identifiant, l'ordre de dissociation étant émis par le terminal utilisateur (5) et comprenant au moins l'un parmi le premier et le deuxième identifiant ;
- à condition qu'une correspondance entre au moins l'un des deux identifiants de référence mémorisés dans la base de donnée du système (1) et au moins l'un parmi le premier identifiant et le deuxième identifiant compris dans l'ordre de dissociation, existe dans la base de données, suppression de la correspondance dans la base de données ; et
- transmission par le système (1) d'une requête de dissociation à l'unité de contrôle (3) du véhicule (4), ladite requête étant configurée pour informer l'unité de contrôle (3) du véhicule (4) qu'une suppression de ladite correspondance a été réalisée dans la base de donnée et pour commander l'unité de contrôle (3) du véhicule (4) de dissocier le dispositif (2) et/ou le terminal utilisateur (5) de l'unité de contrôle (3) du véhicule (4), l'unité de contrôle (3) étant configurée pour, après réception de la requête de dissociation en provenance du système (1), ne pas traiter des commandes émanant du dispositif (2) et/ou du terminal utilisateur (5).

4. Procédé selon la revendication 3, comprenant par ailleurs une étape de :
- sauvegarde de l'identifiant de référence correspondant au premier identifiant dans une deuxième base de données différente de la base de données avant la suppression de la correspondance dans la base de données.

5. Procédé selon l'une quelconque des revendications précédentes, comprenant en outre les étapes suivantes :
- réception par le système (1) d'une commande d'un second dispositif (22) distinct du dispositif (2) ;
- transmission, par le système (1) et à un fournisseur de dispositifs, de la commande.

6. Procédé selon l'une quelconque des revendications précédentes, comprenant en outre les étapes suivantes :
- réception d'une notification émise par l'unité de contrôle (3) du véhicule (4), la notification informant le système (1) d'une demande d'appairage entre un deuxième dispositif (22) et l'unité de contrôle (3) du véhicule (4), le deuxième dispositif (22) étant distinct du dispositif (2) ;
- sur réception de ladite notification, transmission au terminal utilisateur (5) par le système (1) d'une invitation à accepter la demande d'appairage ;
- réception par le système (1) d'une réponse à l'invitation, la réponse indiquant que la demande d'appairage est acceptée ou pas ; et
- transmission à l'unité de contrôle (3) du véhicule (4), par le système (1), d'une autorisation ou d'un refus de la demande d'appairage en fonction de ladite réponse.

7. Procédé selon l'une des revendications précédentes, dans lequel la transmission du premier identifiant et du deuxième identifiant au terminal utilisateur (5) comprend :
- une communication en champ proche (NFC), ou
- une lecture optique, par le terminal utilisateur (5), d'un motif représentatif du premier et du deuxième identifiant et affiché par le dispositif (2), le motif étant par exemple un code barre ou un QR code.

8. Procédé selon l'une des revendications précédentes, dans lequel le dispositif (2) est une carte à puce.

9. Système (1) comprenant :
- une interface de communication (11) configurée pour recevoir un premier identifiant et un deuxième identifiant transmis par un terminal utilisateur (5), le premier identifiant étant propre à un véhicule (4) et le deuxième identifiant étant propre à un dispositif (2), le premier identifiant et le deuxième identifiant ayant été préalablement transmis au terminal utilisateur (5) par le dispositif (2) par une communication sans fil nécessitant une proximité entre le terminal (5) et le dispositif (2),
le système (1) étant configuré pour vérifier l'existence, dans une base de données, d'une correspondance entre deux identifiants de référence mémorisés dans la base de données correspondant respectivement au premier identifiant et au deuxième identifiant ; et
- une interface de communication (12, 13) configurée pour transmettre :
- un mot de passe d'appairage au terminal utilisateur (5),
- un vérificateur à une unité de contrôle(3) du véhicule (4),
à condition que ladite correspondance existe dans la base de données,
le vérificateur étant configuré pour autoriser un établissement d'un canal de communication sécurisé entre le terminal (5) et l'unité de contrôle (3) du véhicule (4) à condition qu'un mot de passe candidat transmis par le terminal utilisateur (5) à l'unité de contrôle (3) du véhicule (4) corresponde au mot de passe d'appairage transmis.

10. Produit programme d'ordinateur comprenant des premières instructions de code de programme pour commander l'exécution des étapes d'un premier procédé conforme à l'une quelconque des revendications 1 à 8, lorsque les premières instructions de code sont exécutées par un système (1) ; et optionnellement des deuxièmes instructions de code de programme pour commander l'exécution des étapes d'un deuxième procédé, lorsque les deuxièmes instructions de code sont exécutées par un terminal utilisateur (5), le deuxième procédé comprenant :
- réception, par le terminal utilisateur (5), du premier identifiant et du deuxième identifiant transmis par le dispositif (2),
- transmission, par le terminal utilisateur (5), au système (1), du premier identifiant et du deuxième identifiant reçus.
